# EUROPEAN PATENT APPLICATION

(11) **EP 2 611 002 A2**
(43) Date of publication of application: **03.07.2013**
(21) Application number: 12195682.5
(22) Date of filing: 05.12.2012
(51) Int. Cl.: H02K 1/27, H02K 1/02

(54) **Dual magnet rotor**

(30) Priority: 28.12.2011 US 201113338629
(71) Applicant: Remy Technologies, LLC, Pendleton, IN 46064 (US)
(72) Inventor: Hamer, Colin J, Noblesville, Indiana 46060 (US); Wan, Koon Hoong, Fishers, Indiana 46037 (US); Chamberlin, Bradley D, Pendleton, Indiana 46064 (US); Jung, Yong-Bae, Noblesville, Indiana 46062 (US)
(74) Representative: Roberts, Peter David

(57) **Abstract**

Apparatus and methods for improved performance of internal permanent magnet electric machines. In some embodiments, there are multiple pairs of permanent magnets. A first pair is adapted and configured to be more effectively flux linked to the stator, and fabricated from a material having better high temperature magnetic characteristics than a second material chosen for fabrication of a second, larger, inner pair of magnets which can be fabricated from a second, different material.

## Description

### FIELD OF THE INVENTION

Various embodiments of the current invention pertain to the selection of materials for permanent magnets used in electrical machines, and more specifically to the use of multiple configurations of permanent magnets used in an internal permanent magnet (IPM) machine.

### BACKGROUND OF THE INVENTION

In high power IPM electric machines "Rare Earth" materials are used to improve performance. The raw materials for these are very expensive and also offer varying temperature : performance compromises.

A rotor within an IPM machine utilizing high performance magnets may not be able to perform at the temperatures produced at the required continuous power levels. Hence a compromise can be made between peak available power and demagnetization protection. Currently one has to choose a magnet that can withstand high temperature, with a reduction in peak available power, or a magnet that has high peak power, but with a reduction in continuous temperature. Also the higher temperature capable magnets are more expensive.

Various embodiments of the inventions discussed herein address these aspects of IPM machines in novel and nonobvious ways.

### SUMMARY OF THE INVENTION

One aspect of some embodiments of the present invention pertains to an internal permanent magnet motor. In some embodiments the motor has different sizes and configurations of permanent magnets, and uses multiple types of materials for the magnets.

Another embodiment includes a rotor having an outer diameter, and a first plurality of permanent magnets fabricated from a first material and a second plurality of permanent magnets fabricated from a second different material. In yet another embodiment the first material has a first demagnetization knee at a first flux density, and the second material has a second demagnetization knee at a second flux density. Still other embodiments include each of the first plurality of magnets having a first mass; each of the second plurality of magnets having a second mass, wherein the first mass is less than the second mass, and the first flux density is less than the second flux density.

Another aspect of the present invention pertains to an internal permanent magnet motor. Some embodiments include a stator including a plurality of electrical conductors capable of carrying a predetermined electrical current Other embodiments include a rotor rotatably supported within the stator, the rotor including a first plurality of permanent magnets fabricated from a first material and a second plurality of permanent magnets fabricated from a second different material. In yet other embodiments, the first plurality have a first magnetic flux density at the predetermined stator current, and the second plurality have a second magnetic flux density at the same predetermined stator current In still other embodiments, the first material has a first demagnetization flux at the first flux density and the second material has a second demagnetization flux at the second flux. density; wherein the first flux density is less than the second demagnetization flux and the second flux density is greater than the second demagnetization flux.

According to an aspect of the invention there is provided an internal permanent magnet motor, comprising: a stator including a plurality of electrical conductors; a rotor having an outer diameter and being rotatable within by said stator, said rotor including a first plurality of permanent magnets fabricated from a first material and a second plurality of permanent magnets fabricated from a second different material; and said first material having a first demagnetization knee at a first flux density and a predetermined temperature, said second material having a second demagnetization knee at a second flux density and the same predetermined temperature and the first flux density is less than the second flux density.

Said second plurality may be a plurality of pairs of magnets symmetrical about a centerline.

Each of said first plurality may be located between each magnet of the corresponding pair of said second plurality.

Said first plurality may be a plurality of pairs of magnets symmetrical about the same centerline.

Each pair of said first plurality may be located between each magnet of the corresponding pair of said second plurality.

Each pair of said first plurality may be V shaped and each pair of said second plurality may be V shaped.

Said first plurality may be a plurality of pairs of magnets.

Each of said first plurality of magnets may have a first volume; each of said second plurality of magnets may have a second volume, and the first volume may be less than the second volume.

According to an aspect of the invention there is provided an internal permanent magnet motor, comprising: a stator including a plurality of electrical conductors capable of carrying a predetermined electrical current proximate to an inner diameter; and a rotor having an outer diameter and being rotatable within the inner diameter of said stator, said rotor including a first plurality of permanent magnets fabricated from a first material and a second plurality of permanent magnets fabricated from a second different material; said first plurality having a first magnetic flux density at the predetermined stator current, said second plurality having a second magnetic flux density at the same predetermined stator current; said first material having a first demagnetization flux density at a predetermined temperature, said second material having a second demagnetization flux density at the predetermined temperature; and the first demagnetization flux density is less than the second demagnetization flux density; wherein the first magnetic flux density is less than second demagnetization flux density and the second magnetic flux density is greater than the second demagnetization flux density.

The first flux density and the second flux density may each be greater than the first demagnetization flux.

Said first magnetic flux density may be the normal component of magnetic surface flux density.

The predetermined current may be the maximum peak current rating for the motor.

The predetermined temperature may be about equal to or less than the maximum continuous temperature rating for the motor.

Said first material may include at least one rare earth material.

Said second material may include at least one rare earth material.

Said second plurality may be a plurality of pairs of substantially identical magnets.

Each of said first plurality may be located between each magnet of the corresponding pair of said second plurality.

Said first plurality may be a plurality of pairs of substantially identical magnets.

Each pair of said first plurality may be located between each magnet of the corresponding pair of said second plurality.

Said first plurality may be a plurality of pairs of substantially identical magnets.

Each of said first plurality of magnets may have a first mass, each of said second plurality of magnets may have a second mass, and the first mass may be less than the second mass.

Each of said first plurality of magnets may have a first volume, each of said second plurality of magnets may have a second volume, and the first volume may be less than the second volume.

Different features of different aspects of the invention may be combined together.

It will be appreciated that the various apparatus and methods described in this summary section, as well as elsewhere in this application, can be expressed as a large number of different combinations and subcombinations. All such useful, novel, and inventive combinations and subcombinations are contemplated herein, it being recognized that the explicit expression of each of these combinations is unnecessary.

### BRIEF DESCRIPTION OF THE DRAWINGS

Some of the figures shown herein may include dimensions. Further, some of the figures shown herein may have been created from scaled drawings or from photographs that are scalable. It is understood that such dimensions, or the relative scaling within a figure, are by way of example, and not to be construed as limiting.

FIG. 1 is a perspective view of a motor assembly according to one embodiment of the present invention.

FIG. 2 is a side view of the apparatus of FIG. 1.

FIG. 3A is an exploded view of the rotor and stator of FIG. 2.

FIG. 3B is a side perspective view of the rotor and stator of FIG. 2.

FIG. 4A is an enlargement of a cross sectional portion of the assembled rotor and stator of FIG. 2.

FIG. 4B is an enlargement of a portion of the apparatus of FIG. 4A

FIG. 5A is a perspective view of a pair of coated magnet assemblies according to one embodiment of the present invention.

FIG. 5B is a view of the assembly of FIG. 5A without the coating. FIG. 5C is an end view of the assembly of FIG. 5B.

FIG. 6A is a portion of a cross section of a rotor and stator according to another embodiment of the present invention.

FIG. 6B is a portion of a cross section of a rotor and stator according to another embodiment of the present invention.

FIG. 6C is a portion of a cross section of a rotor and stator according to another embodiment of the present invention.

FIG. 6D is a portion of a cross section of a rotor and stator according to another embodiment of the present invention.

FIG. 6E is a portion of a cross section of a rotor and stator according to another embodiment of the present invention.

FIG. 7 is a graphical representation of a magnetization curve of a material according to one embodiment of the present invention, as a function of temperature.

FIG. 8 is a graphical representation of the demagnetization break points of FIG. 7 as a function of magnet temperature for several different materials.

FIG. 9 is a graphical representation of the normal component of magnet surface flux density as a function of current for a particular material, as shown at a plurality of different temperatures.

FIG. 10 is a graphical representation of the normal component of magnet surface flux density as a function of current for a different material, as shown at a plurality of different temperatures.

### DESCRIPTION OF THE PREFERRED EMBODIMENT

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates. At least one embodiment of the present invention will be described and shown, and this application may show and/or describe other embodiments of the present invention. It is understood that any reference to "the invention" is a reference to an embodiment of a family of inventions, with no single embodiment including an apparatus, process, or composition that should be included in all embodiments, unless otherwise stated. Further, although there may be discussion with regards to "advantages" provided by some embodiments of the present invention, it is understood that yet other embodiments may not include those same advantages, or may include yet different advantages. Any advantages described herein are not to be construed as limiting to any of the claims. The usage of words indicating preference, such as "preferably," refers to features and aspects that are present in at least one embodiment, but which are optional for some embodiments.

The use of an N-series prefix for an element number (Nxx.xx) refers to an element that is the same as the non-prefixed element (xx.xx), except as shown and described thereafter, and except for element numbers between 100 and 199. As an example, an element 1020.1 would be the same as element 20.1, except for those different features of element 1020.1 shown and described. Further, common elements and common features of related elements are drawn in the same manner in different figures, and/or use the same symbology in different figures. As such, it is not necessary to describe the features of 1020.1 and 20.1 that are the same, since these common features are apparent to a person of ordinary skill in the related field of technology. This description convention also applies to the use of prime ('), double prime ("), and triple prime("') suffixed element numbers. Therefore, it is not necessary to describe the features of 20.1, 20.1', 20.1", and 20.1"' that are the same, since these common features are apparent to persons of ordinary skill in the related field of technology.

Although various specific quantities (spatial dimensions, temperatures, pressures, times, force, resistance, current, flux densities, voltage, concentrations, wavelengths, frequencies, heat transfer coefficients, dimensionless parameters, etc.) may be stated herein, such specific quantities are presented as examples only, and further, unless otherwise noted, are approximate values, and should be considered as if the word "about" prefaced each quantity. Further, with discussion pertaining to a specific composition of matter, that description is by example only, and does not limit the applicability of other species of that composition, nor does it limit the applicability of other compositions unrelated to the cited composition.

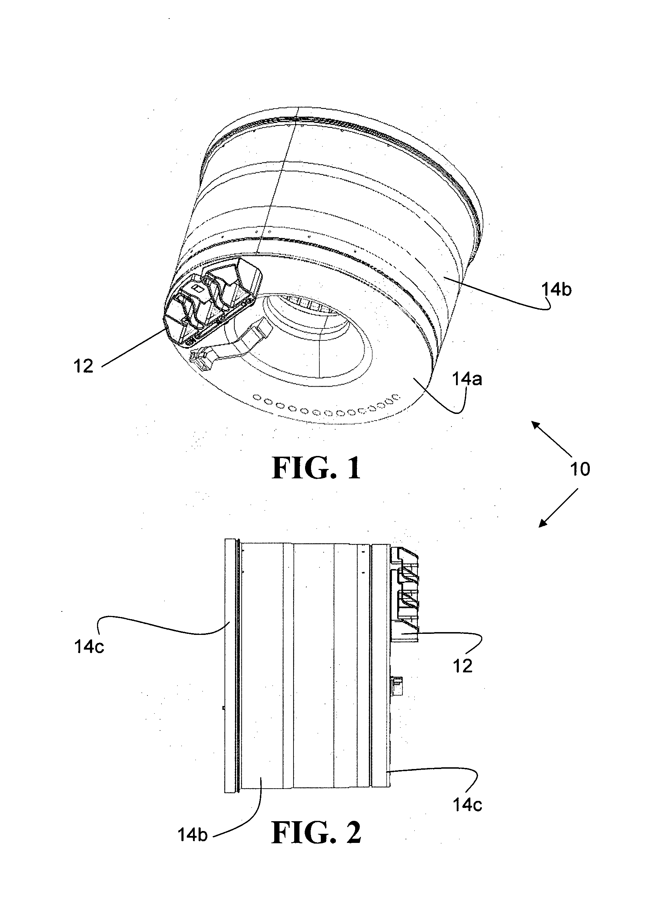

FIGS. 1 and 2 show exterior views of an internal permanent magnet (IPM) electric machine 10 according to one embodiment of the present invention. Machine 10 is preferably a motor such as those used to provide motive power to hybrid vehicles, although other embodiments of the present invention contemplate usage in any type of application. Exterior features of motor 10 include an end cap 14a, sleeve 14b, and endplate 14c that provide a protective covering for the internal features of the motor. A terminal block 12 is adapted and configured to provide three phase electrical power to motor 10.

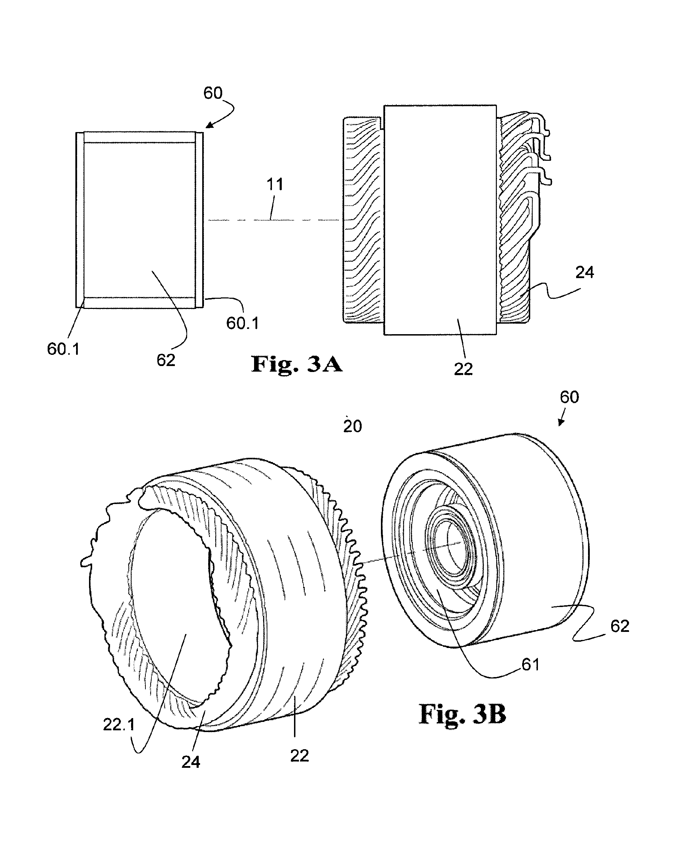

FIGS. 3A and 3B show simplified schematic exploded views of the stator 20 and rotor 60 contained within sleeve 148. Stator 20 includes a laminate assembly 22 comprising a plurality of stacked plates of substantially identical configurations. An electrical conductor assembly 24 provides distributed three-phase electrical power within the annulus defined by laminate assembly 22. Rotor assembly 60 includes a laminate assembly 62 that includes a plurality of stacked, substantially identical individual laminate plates. These plates are coupled to a hub 61 that provides support for laminate assembly 62, as well as providing motive power to a rotating component, such as an input shaft of a transmission or other machine. Rotor 60 is supported by bearings (not shown) and rotates within stator 20 about a rotational axis 11.

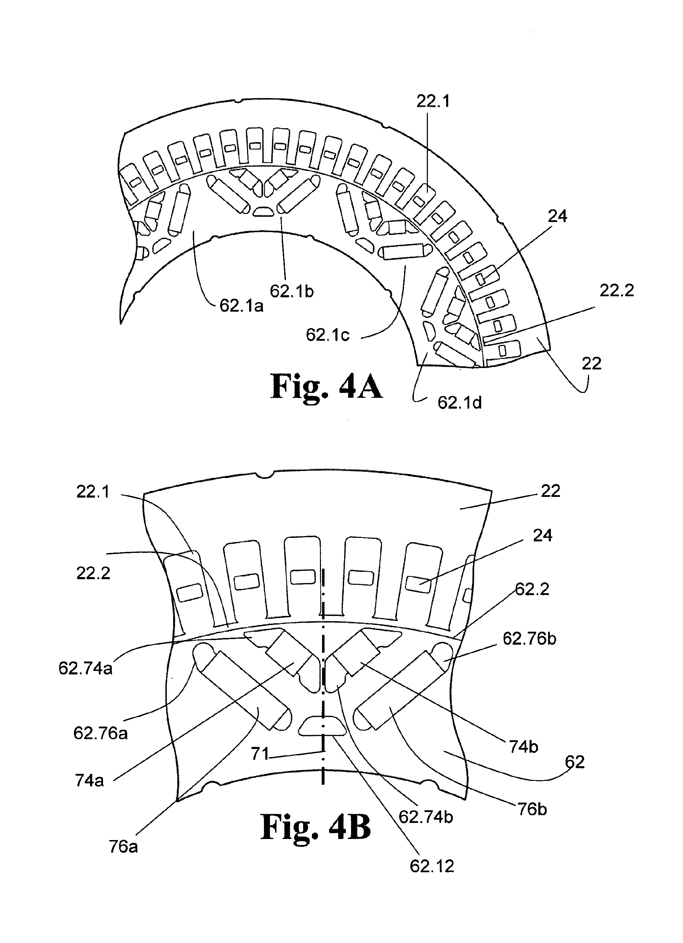

FIGS. 4A and 4B are cross sectional representations of portions of stator 20 and rotor 60, the cross sections being normal to centerline 11. FIG. 4A shows a quadrant of the assembled rotor 60 within stator 20. Each of the plates of laminate assembly 22 includes a plurality of slots 22.1 that are equally distributed about the inner circumference of assembly 22. Each of the slots contains a plurality of electrical conductor assemblies 24 that provide a three-phase, rotating magnetic field about the outer diameter of rotor 60 during operation. For the sake of simplicity, only a single conductor 24 is shown within each slot 22.1

FIG. 4A shows portions of four groups of pockets 62.1 that are fabricated into each of the individual plates of the laminate assembly 62. The four groups 62.1a, 62.1b, 62.1c, and 62.1 dare equally spaced about the periphery 62.2 of rotor 60. FIGS. 4A and 4B show that the groups 62.1 are generally in the shape of a V, and with the legs of the V preferably having an included angle ranging from about eighty degrees to about one hundred and twenty degrees.

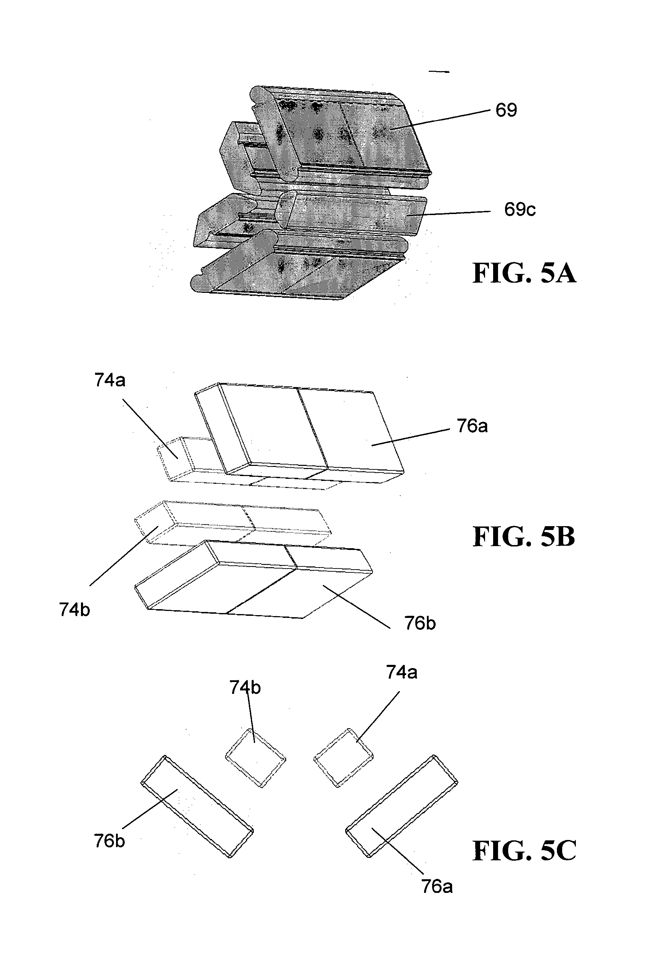

FIG. 4B is a close-up of a single group of pockets 62.1. Each laminate plate defines a plurality of pockets 62.1 for each grouping of magnets. In some embodiments, a grouping 62.1 includes two pair of pockets 62.1 that are arranged symmetrically about a group centerline 71. Some but not necessarily all of these pockets are adapted and configured to contain within them a permanent magnet An outer pair of permanent magnets 74a and 74b are contained within corresponding pockets 62.74a and 62.74b. An inner pair of permanent magnets 76a and 76b are also located symmetrically about axis 71. In some embodiments, laminate assembly 62 further includes a central pocket 62.12 located between longitudinal edges of magnets 76a and 76b. The various magnet-containing slots 62 preferably have shapes adapted and configured to contain a corresponding permanent magnet as well as a plastic casing 69 (referring to FIG. 5A). A plastic member 69c is located within pocket 62.12.

Referring back to FIG. 4B, permanent magnets 74 and 76 can be of any shape, although in some embodiments the magnets are formed into substantially rectangular shapes (as also shown in FIGS. 5B and 5C) for ease of fabrication and assembly. In some embodiments, the outer pair of permanent magnets 74 and the inner pair of magnets 76 have lengths that are substantially the same and substantially run the full longitudinal extent of laminate assembly 62. The height and the width of the magnets 74 and 76 can be of any dimension at the discretion of the designer.

In some embodiments of the present invention, the cross sectional shape of the outer pair 74 is adapted and configured for permanent magnets fabricated from a first material composition. Further, the cross sectional shape of the inner pair 76 of permanent magnets is adapted and configured for magnets fabricated from a second composition of material. In some embodiments of the present invention the first material composition and the second material composition both include one or more rare earth elements, although other embodiments of the present invention are not so limited and contemplate the first and second materials being any type of compositions suitable for service for permanent magnets. Preferably, each magnet of the outer pair 74 has a volume that is substantially less than the volume of a corresponding inner magnet 76. In some embodiments, each outer magnet is less than about one-half the volume of an inner magnet. However, various embodiments of the present invention contemplate inner magnets 74 that are substantially the same size and/or shape as magnets 76. Further, yet other embodiments contemplate inner magnets 74 having substantially the same volume and mass as magnets 76, although other embodiments of the present invention are not so constrained, and contemplate magnets 74 that are different or larger than magnets 76 in either shape or volume.

In some embodiments of the present invention, the outer pair 74 are adapted and configured (such as with regards to shape, volume, and location) to be constructed of a material that is different than the material selected for inner pair 76. Inner pair 76 are adapted and configured for fabrication from a material having different property than the material used for fabrication of pair 74. It has been found that the outer pair 74 of magnets are more susceptible to demagnetization during operation since the outer pair 74 is more effectively flux-linked to the rotating magnetic field of stator 20.

In those embodiments in which the outer magnets are physically smaller than the inner magnets, and further in those in which the outer magnets are located more closely to outer diameters 62.2 of laminate assembly 62, the magnetic surface flux density to which the outer pair 74 of magnets is exposed can be substantially less than the magnetic surface flux density to which the inner pair 76 of magnets is exposed. It has been found that the difference in flux density between the inner pair 76 and the outer pair 74 is sufficiently great enough, especially for conditions of high current flow in conductors 24, to accommodate an outer pair 74 fabricated from a first material composition 102, and the inner pair 76 being fabricated from a different magnetic material composition 104. In some embodiments, it is therefore possible to fabricate the inner pair 76 of magnets from a material 104 that demagnetizes at a higher magnetic flux B(T) than the material 102 chosen for outer pair 74, at a given temperature. The material 102 of the outer pair can be fabricated from a material 102 that, in comparison to a different material 104, that offers overall lower magnetic performance.

An additional aspect of some embodiments of the present invention is that the material 102 chosen for fabrication of the outer pair 74 magnets, in comparison to a material 104 chosen for fabrication of the inner pair 76 of magnets, preferably has better high temperature characteristics. Yet another aspect of some embodiments is that the outer pair 74 of magnets uses less material than the inner pair 76. In those embodiments combining one or more of the aforementioned aspects, it is possible to limit the use of a more expensive material 102 to the smaller outer pair 74, and use a less expensive material 104 for the inner pair 76, with the result that not only is the grouping of inner and outer pairs overall less expensive, but further overall more resistant to demagnetization.

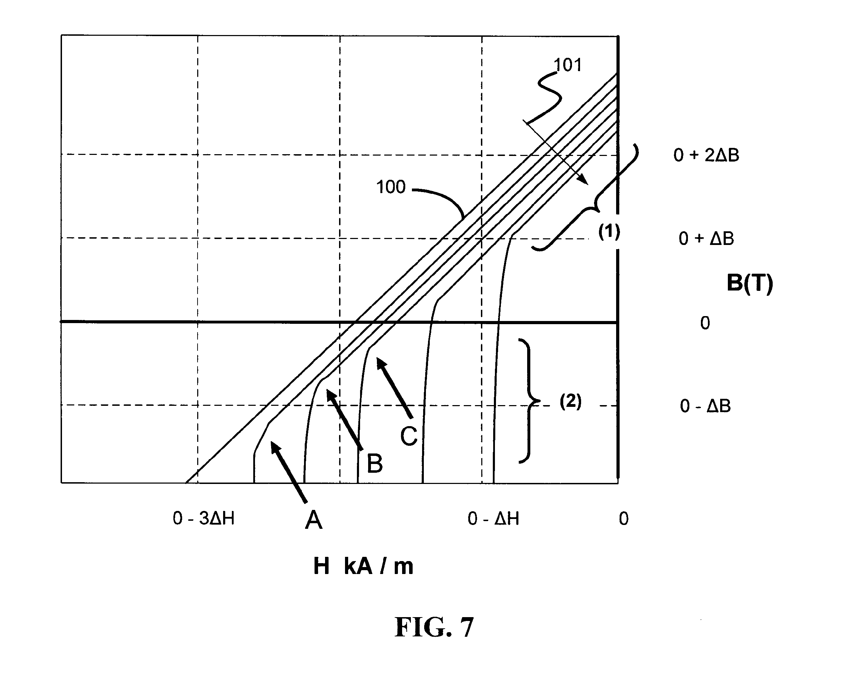

FIG. 7 is a graphical representation of magnetic characteristics of a material. FIG. 7 shows the magnetic flux density in Tesla as a function of magnetic field strength in kiloamps per meter. FIG. 7 shows a family 100 of six material characteristics, with each line of the plot representing a different material temperature. Arrow 101 shows the direction of increasing temperature across the family. It can be seen that five of the constant temperature lines can be characterized as having three regions of response: (1) a region having a linear relationship of flux density as a function of field strength, especially as field strength approaches zero; (2) a region at levels of field strength in which the flux density is substantially vertically asymptotic; and (3) a transition or "knee" between regions (1) and (2).

FIG. 7 shows a line of lowest material temperature in which there is a linear relationship (with positive slope) for the entire graphical range from a field strength of -3 delta H to a field strength of 0, A second plot at the next highest material temperature shows a knee characteristic A at a field strength of about -2.5 delta H. The next highest temperature line (the third, going from left to right) shows a knee characteristic B at about - 2.2 delta H. The fourth constant temperature line shows a knee characteristic C occurring at a field strength of about -.8 delta H. The highest temperature line within family 100 shows a knee characteristic at about -.75 delta H. The knee characteristics represent a transition from a useful range of magnetic properties (i.e., range (1) in which the magnetic characteristics are useful for providing motive power) and a range in which the magnetization of the material is possible (i.e., range (2) which is nearly vertical). IPM machines operating within region (2) can experience partial or complete demagnetization of the rotor magnets.

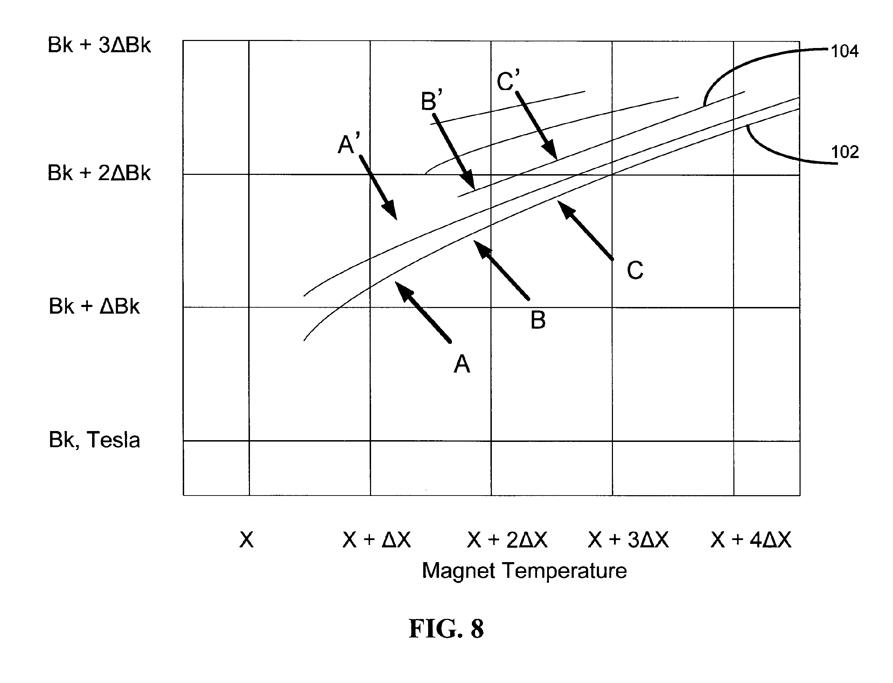

FIG. 8 is a graphical representation of some of the information of FIG. 7, combined with similar data corresponding to different material types. FIG. 8 shows a family of plots that represent the transitional magnetic flux density of a material as a function of material temperature. FIG. 8 includes in line 102 representing the locus of points that present knee characteristics at a variety of temperatures, and further after application of a smoothing algorithm to interpolate between values. The knee data points A, B, and C of a first material are shown on curve 102 along with demagnetization flux density knees at other temperatures as well. In one embodiment material 102 represents a rare earth magnet including quantities of neodymium, dysprosium, iron and boron. FIG. 8 also shows a characteristic of a material 104 having different properties. FIG. 8 identifies points A', B', and C' that identify the knee characteristics for material 104 at the same temperatures identified for material 102. In some embodiments, material 104 is also a rare earth permanent magnet including quantities of neodymium, dysprosium, iron and boron, although preferably in different percentages or with different processing than material 102. FIG. 8 shows that at any particular temperature, a magnet fabricated from material 104 encounters a demagnetization knee transition at a higher flux density than a magnet fabricated from material 102.

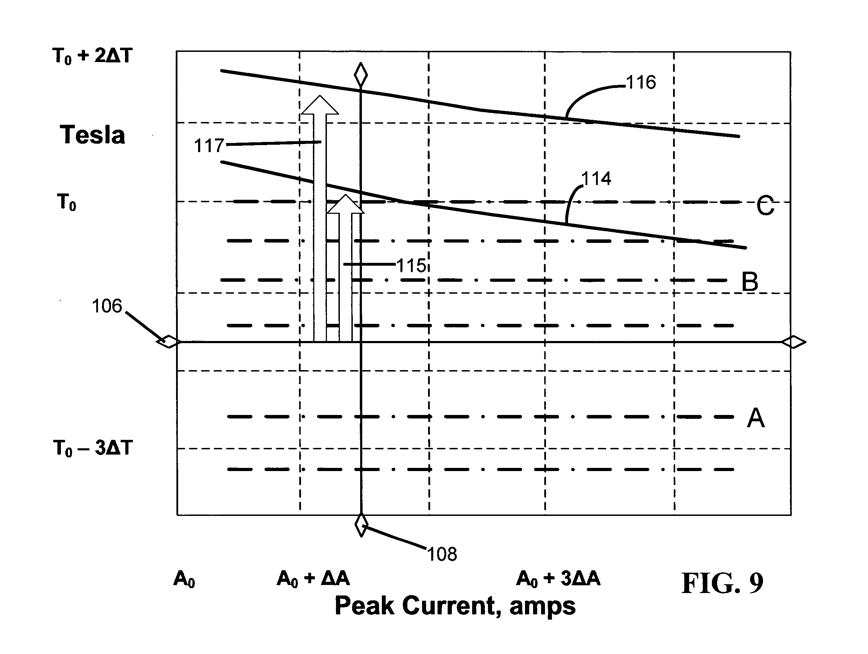

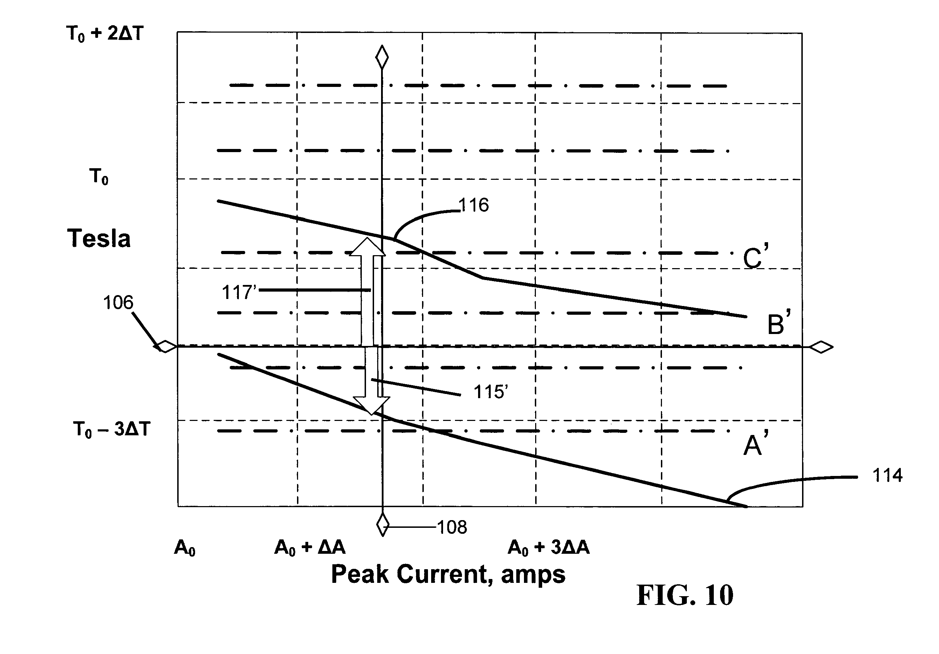

FIGS. 9 and 10 are graphical representations of magnetic flux density as a function of stator current, for materials 102 and 104, respectively. Each of these two figures includes a knee characteristic at predetermined design temperature 106 that plots as a straight line of constant flux density. These figures also include a predetermined design stator current 108 that plots as a vertical line. In some embodiments, temperature line 106 relates to a maximum continuous temperature, and design characteristic 108 relates to a maximum peak stator current.

FIGS. 9 and 10 also show the flux densities encountered by the magnet pairs as a function of stator current Line 114 represents the flux density versus current characteristic for outer pair 74 of rotor magnets. Curve 116 represents the flux density encountered by the inner pair 76 of magnets as a function of stator current Curves 114 and 116 in some embodiments are established by analytical models of motor 10, although various embodiments of the present invention contemplate the plotting of outer pair characteristics 114 and inner pair characteristics 116 as developed or measured by any method.

FIGS. 9 and 10 further show families of temperature plots for the transition or knee demagnetization characteristic of the corresponding material. FIG. 9 shows a family of substantially horizontal lines (represented by double dashes separated by a dot) that represent the flux demagnetization knee as a particular temperature. Points A, B, and C, respectively, from curve 102 of FIG. 8 each plot as a line A, B, or C respectively, on FIG. 9. Likewise, FIG. 10 includes material characteristics from alternate material 104, with knee characteristics A', B', and C' being plotted at as substantial horizontal lines A', B', and C', respectively, on FIG. 10.

Each of FIGS. 9 and 10 include arrows 115 and 117, respectively, that indicate a type of design margin relative to demagnetization of outer and inner pairs 74 and 76, respectively. Referring first to FIG. 9, it can be seen that at the peak current 108, that the magnetic flux density 114 of outer pair 74 is spaced above the design temperature 106, represented by arrow 115. Therefore, when outer pair 74 of magnets are operating at the temperature represented by limit 106, and further when the stator is provided with current represented by limit 108, that the magnets will be operating in region (1) of FIG. 7, and therefore have a design margin that makes demagnetization of outer pair 74 unlikely. For an inner pair 76 of magnets fabricated from the same material 102, arrow 117 represents an even greater margin protecting against demagnetization under temperature condition 106 and current condition 108.

Referring to FIG. 10, the same current and flux density characteristics 114 and 116 are shown superimposed over the characteristics of a second, different material 104. Current rating 108 and temperature ratings 106 are the same on FIG. 10 as for FIG. 9. However, it can be seen that with material 104, that the outer pair 74 of magnets will have a negative design margin as represented by arrow 115'. Under these operating conditions of temperature ratings 106 and current rating 108, outer pair 74 are operating at a temperature that is higher than the corresponding demagnetization knee for material 104. Therefore, there is a greater likelihood that magnet pair 74 will become demagnetized when motor 10 operates under temperature and current conditions 106 and 108, respectively. However, a pair of magnets 76 fabricated from material 104 show a positive design margin 117' at the rated conditions. Therefore, a pair 76 of magnets fabricated from material 104 is less likely to demagnetize under these operating conditions. However, pair 74 of magnets can be fabricated from material 102, as discussed with regard to FIG. 9, in order for pair 74 to have a positive demagnetization design margin.

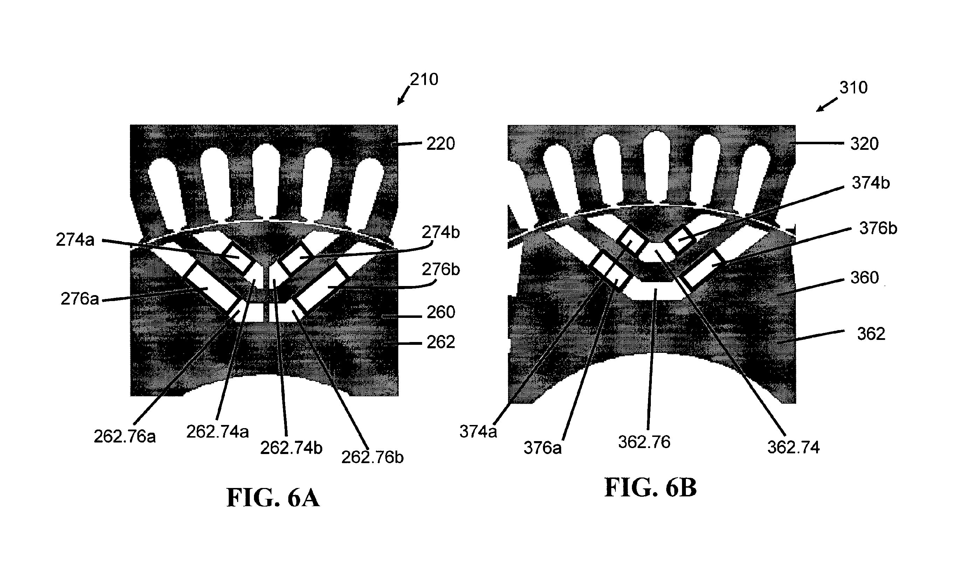

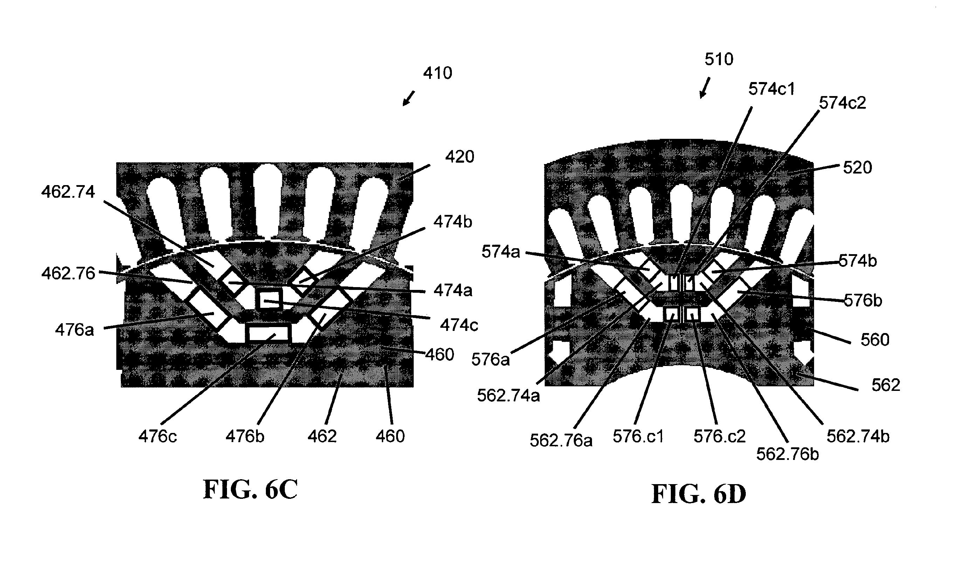

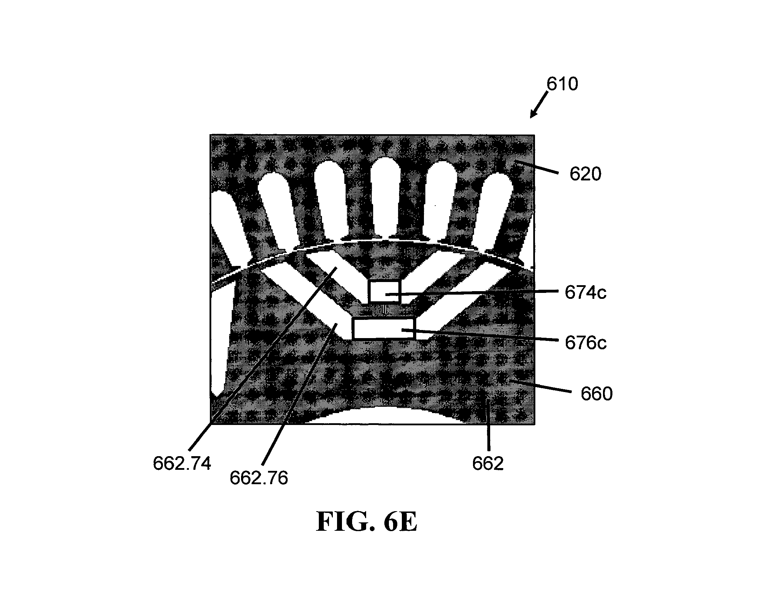

FIGS. 6A, 6B, 6C, 6D, and 6E show arrangements of inner and outer magnets according to other embodiments of the present invention.

FIG. 6A is cross sectional representation of a portion of a motor 210 according to another embodiment of the present invention. Motor 210 includes a rotor 260 that is rotatably supported by and within a stator 220. FIG. 6A shows pockets within the laminate assembly 222 of stator 220, it being understood that these pockets are adapted and configured to contain conductor assemblies for providing three-phase power.

The laminate assembly 262 of rotor 260 defines a plurality of pockets 262.74a, 262.74b, 262.76a, and 262.76b that are fabricated into each plate of the laminate assembly, and which extend the longitudinal length of rotor 260. These pockets are preferably arranged such that a dividing wall of laminate plate material is located between adjacent pockets 262.74a and 262.74b, and further between pockets 262.76a and 262.76b.

An outer pair of permanent magnets 274a and 274b are located within their respective pockets. An inner pair of 276a and 276b are located within their respective pockets. Preferably, the magnets are received within their respective pockets such that there is open space in the pockets on each side of the magnets, this open space being unfilled in some embodiments and filled with a plastic material in other embodiments. Preferably, each of the magnets 274a and 274b are of substantially similar shape and size, and further magnets 276a and 276b are of substantially the same shape and size. Preferably, each magnet 274 has a smaller volume than either of the inner magnets 276. In some embodiments, outer magnets 274 are fabricated from a first magnetic material, and inner magnets 276 are fabricated from a second, different material, such that the first material has magnetic properties in relation to the second material in a manner similar to the previous discussion of the properties of material 102 relative to material 104.

FIG. 6B is cross sectional representation of a portion of a motor 310 according to another embodiment of the present invention. Motor 310 includes a rotor 360 that is rotatably supported by and within a stator 320. FIG. 6B shows pockets within the laminate assembly 322 of stator 320, it being understood that these pockets are adapted and configured to contain conductor assemblies for providing three-phase power.

The laminate assembly 362 of rotor 360 defines a plurality of pockets 362.74 and 362.76 that are fabricated into each plate of the laminate assembly, and which extend the longitudinal length of rotor 360. In some embodiments, pockets 362.74 and 362.76 are each single, continuous pockets, and further preferably with a centrally located region suitable as unfilled space.

An outer pair of permanent magnets 374a and 374b are located within their respective pockets. An inner pair of 376a and 376b are located within their respective pockets. Preferably, the magnets are received within their respective pockets such that there is open space in the pockets on each side of the magnets, this open space being unfilled in some embodiments and filled with a plastic material in other embodiments. Preferably, each of the magnets 374a and 374b are of substantially similar shape and size, and further magnets 376a and 376b are of substantially the same shape and size. Preferably, each magnet 374 has a smaller volume than either of the inner magnets 376. In some embodiments, outer magnets 374 are fabricated from a first magnetic material, and inner magnets 376 are fabricated from a second, different material, such that the first material has magnetic properties in relation to the second material in a manner similar to the previous discussion of the properties of material 102 relative to material 104.

FIG. 6C is cross sectional representation of a portion of a motor 410 according to another embodiment of the present invention. Motor 410 includes a rotor 460 that is rotatably supported by and within a stator 420. FIG. 6C shows pockets within the laminate assembly 422 of stator 420, it being understood that these pockets are adapted and configured to contain conductor assemblies for providing three-phase power.

The laminate assembly 462 of rotor 460 defines a plurality of pockets 462.74 and 462.76 that are fabricated into each plate of the laminate assembly, and which extend the longitudinal length of rotor 460. In some embodiments, pockets 462.74 and 462.76 are each single, continuous pockets, and each further preferably including a centrally located permanent magnets 474c and 476c, respectively.

An outer plurality of permanent magnets 474a, 474b, and 474c are located within their respective portion of pocket 462.74. An inner plurality of 476a, 476b, and 476c are located within their respective portion of pocket 462.76. Preferably, the magnets are received within their respective pockets such that there is open space in the pockets on each side of the magnets, this open space being unfilled in some embodiments and filled with a plastic material in other embodiments. Preferably, each of the magnets 474a, 474b, and 474c are of substantially similar shape and size, and further magnets 476a, 476b, and 476c are of substantially the same shape and size, but it is further contemplated that the centrally located magnets 474c and 476c may be of different sizes and configurations than other magnets within their grouping. Preferably, each magnet 474 has a smaller volume than either of the inner magnets 476. In some embodiments, outer magnets 474 are fabricated from a first magnetic material, and inner magnets 476 are fabricated from a second, different material, such that the first material has magnetic properties in relation to the second material in a manner similar to the previous discussion of the properties of material 102 relative to material 104.

FIG. 6D is cross sectional representation of a portion of a motor 510 according to another embodiment of the present invention. Motor 510 includes a rotor 560 that is rotatably supported by and within a stator 520. FIG. 6D shows pockets within the laminate assembly 522 of stator 520, it being understood that these pockets are adapted and configured to contain conductor assemblies for providing three-phase power.

The laminate assembly 562 of rotor 560 defines a plurality of pockets 562.74a, 562.74b, 562.76a, and 562.76b that are fabricated into each plate of the laminate assembly, and which extend the longitudinal length of rotor 560. These pockets are preferably arranged such that a dividing wall of laminate plate material is located between adjacent pockets 562.74a and 562.74b, and further between pockets 562.76a and 562.76b.

An outer pair of permanent magnets 574a and 574c1 are located within their pockets, and another pair of magnets 574b and 574c2 are located within their pockets. An inner pair 576a and 576c1 are located within their pocket, and 576b and 576c2 are located within their pocket Preferably, the magnets are received within their respective pockets such that there is open space in the pockets on each side of the magnets, this open space being unfilled in some embodiments and filled with a plastic material in other embodiments. In some embodiments the centrally located magnets 574c1 and 574c2 are located on either side of a central dividing wall, and centrally located magnets 576c1 and 576c2 are located on either side of a dividing wall.

Preferably, each of the magnets 574a and 574b are of substantially similar shape and size, and further magnets 576a and 576b are of substantially the same shape and size. In some embodiments magnets 574c1 and 574c2 are of the same size, and each is smaller than central magnets 576c1 and 576c2, which are also of the same size. In some embodiments, outer magnets 574 are fabricated from a first magnetic material, and inner magnets 576 are fabricated from a second, different material, such that the first material has magnetic properties in relation to the second material in a manner similar to the previous discussion of the properties of material 102 relative to material 104.

FIGS. 6E is cross sectional representation of a portion of a motor 610 according to another embodiment of the present invention. Motor 610 includes a rotor 660 that is rotatably supported by and within a stator 620. FIG. 6E shows pockets within the laminate assembly 622 of stator 620, it being understood that these pockets are adapted and configured to contain conductor assemblies for providing three-phase power.

The laminate assembly 662 of rotor 660 defines a plurality of pockets 662.74 and 662.76 that are fabricated into each plate of the laminate assembly, and which extend the longitudinal length of rotor 660. In some embodiments, pockets 662.74 and 662.76 are each single, continuous pockets, and further preferably with a centrally located region suitable for use with a permanent magnet.

An outer permanent magnet 674c is located within its respective pocket. An inner magnet 676cis located within its respective pocket. Preferably, the magnets are centrally received within their respective pockets such that there is open space in the pockets on each side of the magnets, this open space being unfilled in some embodiments and filled with a plastic material in other embodiments. Preferably, magnet 674c has a smaller volume than the inner magnet 676c. In some embodiments, outer magnet 674c is fabricated from a first magnetic material, and inner magnets 676c is fabricated from a second, different material, such that the first material has magnetic properties in relation to the second material in a manner similar to the previous discussion of the properties of material 102 relative to material 104.

While the inventions have been illustrated and described in detail in the drawings and foregoing description, the same is to be considered as illustrative and not restrictive in character, it being understood that only certain embodiments have been shown and described and that all changes and modifications that come within the spirit of the invention are desired to be protected.

## Claims

1. An internal permanent magnet motor, comprising:
a stator including a plurality of electrical conductors;
a rotor having an outer diameter and being rotatable within by said stator, said rotor including a first plurality of permanent magnets fabricated from a first material and a second plurality of permanent magnets fabricated from a second different material; and
said first material having a first demagnetization knee at a first flux density and a predetermined temperature, said second material having a second demagnetization knee at a second flux density and the same predetermined temperature and the first flux density is less than the second flux density.

2. The motor of claim 1 wherein said second plurality is a plurality of pairs of magnets symmetrical about a centerline.

3. The motor of claim 2 wherein each of said first plurality is located between each magnet of the corresponding pair of said second plurality.

4. The motor of claim 2 wherein said first plurality is a plurality of pairs of magnets symmetrical about the same centerline.

5. The motor of claim 4 wherein each pair of said first plurality is located between each magnet of the corresponding pair of said second plurality; wherein optionally
each pair of said first plurality is V shaped and each pair of said second plurality is V shaped.

6. The motor of claim 1 wherein said first plurality is a plurality of pairs of magnets; or wherein each of said first plurality of magnets have a first volume; each of said second plurality of magnets have a second volume, and the first volume is less than the second volume.

7. An internal permanent magnet motor, comprising:
a stator including a plurality of electrical conductors capable of carrying a predetermined electrical current proximate to an inner diameter; and
a rotor having an outer diameter and being rotatable within the inner diameter of said stator, said rotor including a first plurality of permanent magnets fabricated from a first material and a second plurality of permanent magnets fabricated from a second different material;
said first plurality having a first magnetic flux density at the predetermined stator current, said second plurality having a second magnetic flux density at the same predetermined stator current;
said first material having a first demagnetization flux density at a predetermined temperature, said second material having a second demagnetization flux density at the predetermined temperature; and the first demagnetization flux density is less than the second demagnetization flux density;
wherein the first magnetic flux density is less than second demagnetization flux density and the second magnetic flux density is greater than the second demagnetization flux density.

8. The motor of claim 7 wherein the first flux density and the second flux density are each greater than the first demagnetization flux.

9. The motor of claim 7 wherein said first magnetic flux density is the normal component of magnetic surface flux density.

10. The motor of claim 7 wherein the predetermined current is the maximum peak current rating for the motor; wherein optionally the predetermined temperature is about equal to or less than the maximum continuous temperature rating for the motor.

11. The motor of claim 7 wherein said first material includes at least one rare earth material; wherein optionally said second material includes at least one rare earth material.

12. The motor of claim 7 wherein said second plurality is a plurality of pairs of substantially identical magnets.

13. The motor of claim 12 wherein each of said first plurality is located between each magnet of the corresponding pair of said second plurality.

14. The motor of claim 12 wherein said first plurality is a plurality of pairs of substantially identical magnets; wherein optionally each pair of said first plurality is located between each magnet of the corresponding pair of said second plurality.

15. The motor of claim 7 wherein said first plurality is a plurality of pairs of substantially identical magnets; or wherein each of said first plurality of magnets have a first mass, each of said second plurality of magnets have a second mass, and the first mass is less than the second mass; or wherein each of said first plurality of magnets have a first volume, each of said second plurality of magnets have a second volume, and the first volume is less than the second volume.
